# EUROPÄISCHE PATENTANMELDUNG

(11) **EP 3 255 412 A1**
(43) Veröffentlichungstag der Anmeldung: **13.12.2017**
(21) Anmeldenummer: 16173068.4
(22) Anmeldetag: 06.06.2016
(51) Int. Cl.: G01N 21/3504, G01J 3/02, G01J 3/10, G01N 21/17, G01N 21/61, G01N 21/31, G01N 21/39

(54) **GASANALYSEVORRICHTUNG UND VERFAHREN ZUR GASANALYSE NACH DEM PRINZIP DER NICHTDISPERSIVEN INFRAROTSPEKTROSKOPIE (NDIR)**

(71) Anmelder: SICK AG, 79183 Waldkirch (DE)
(72) Erfinder: Zöchbauer, Dr. Michael, 61440 Oberursel (DE); Warratz, Dr. Ralf, 22339 Hamburg (DE); Stolze, Ingo, 22307 Hamburg (DE)

(57) **Zusammenfassung**

Es wird eine Gasanalysevorrichtung (10) nach dem Prinzip der nichtdispersiven Infrafrotspektroskopie (NDIR) zur Erfassung von Gaskomponenten in einem Messgas (22) angegeben, wobei die Gasanalysevorrichtung (10) einen Lichtsender (12), eine Küvette (20) zur Aufnahme des Messgases (22), einen im Wellenlängenbereich der Absorption der zu erfassenden Gaskomponenten selektiv sensitiven Detektor (28) und eine Auswertungseinheit (36, 35) für ein Detektorsignal des Detektors (28) aufweist, und wobei Lichtsender (12), Küvette (20) und Detektor (28) derart angeordnet sind, dass Licht des Lichtsenders (12) nach Transmission der Küvette (20) auf den Detektor (32) fällt. Dabei weist der Lichtsender (12) mehrere Lichtquellen (14a-c), insbesondere Laserlichtquellen, unterschiedlicher Wellenlängen auf, deren Licht auf einer gemeinsamen optischen Achse (18) in die Küvette (20) einkoppelbar ist.

## Beschreibung

Die Erfindung betrifft eine Gasanalysevorrichtung und ein Verfahren zur Gasanalyse nach dem Prinzip der nichtdispersiven Infrafrotspektroskopie (NDIR) zur Erfassung von Gaskomponenten in einem Messgas nach dem Oberbegriff von Anspruch 1 beziehungsweise 10.

Mit einer Gasanalyse werden Informationen über bestimmte Gaskomponenten in dem Messgas erfasst. Ein Anwendungsgebiet ist die industrielle Gasanalyse und hier speziell die Messung von Schadstoffemissionen aus Kraftwerken oder anderen Anlagen. In dieser Rauchgasmessung sollen oft mehrere Gaskomponenten gleichzeitig erfasst werden, wie etwa CO, NO und SO₂.

Das fotometrische NDIR-Verfahren findet breite praktische Anwendung, da es preiswert und flexibel einsetzbar ist. Die Messung erfolgt in Transmission durch eine Küvette mit dem Messgas. Empfangsseitig ist ein Wellenlängenfilter mit einem Infrarot-Lichtempfänger vorgesehen. Das Wellenlängenfilter ist möglichst gut auf die Absorptionswellenlänge einer zu erfassenden Gaskomponente abgestimmt. Eine besondere Implementierung sieht einen optoakustischen Detektor vor. Dieser enthält eine Kammer, die mit reinem Gas entsprechend einer bestimmten zu erfassenden Gaskomponente gefüllt ist und die als Wellenlängenfilter wirkt. Als Strahlungsquelle wird üblicherweise ein breitbandiger Glühstrahler verwendet. Je nach Konzentration der zu erfassenden Gaskomponente in dem Messgas wird das Licht der Strahlungsquelle im Bereich der Absorptionswellenlänge dieser Gaskomponente gedämpft, für die der Detektor aufgrund des Wellenlängenfilters selektiv sensitiv ist. Daher kann dem Detektorsignal die gesuchte Information über die Gaskomponente sehr einfach entnommen werden.

In einer Weiterbildung ist auch eine Multikomponentenmessung möglich. Das Wellenlängenfilter hat dann mehrere Durchlassbereiche entsprechend den Absorptionswellenlängen der zu erfassenden Gaskomponenten. Die selektive Trennung der einzelnen Messkomponenten erfolgt über ein Filterrad, mit dem mehrere Interferenzfilter sequentiell angesteuert werden. Durch die sequentielle Abfolge steht aber für jede Messkomponente nur ein Teil der Messzeit zur Verfügung, und diese verringerte Messzeit führt zu einer schlechteren Nachweisgrenze. Außerdem sind zum Betrieb des Filterrades mechanisch bewegte Teile erforderlich.

Es ist daher Aufgabe der Erfindung, eine Gasanalyse nach dem NDIR-Prinzip zu verbessern.

Diese Aufgabe wird durch eine Gasanalysevorrichtung und ein Verfahren zur Gasanalyse nach dem Prinzip der nichtdispersiven Infrafrotspektroskopie (NDIR) zur Erfassung von Gaskomponenten in einem Messgas nach Anspruch 1 beziehungsweise 10 gelöst. Die Gaskomponente ist ein bestimmtes interessierendes Gas, wie etwa CO, NO oder SO₂. Durch die NDIR-Gasanalyse soll erfasst werden, ob die jeweilige Gaskomponente in dem Messgas vorhanden ist, und gegebenenfalls in welcher Konzentration oder Menge beziehungsweise mit welchem Anteil im Messgas. Die Erfindung geht nun von dem Grundgedanken aus, mehrere Lichtquellen unterschiedlicher Wellenlängen zu verwenden. Die Lichtquellen sollten möglichst schmalbandig auf eine jeweilige Absorptionswellenlänge einer Gaskomponente abgestimmt sein. Dafür eignen sich vorzugsweise Laserlichtquellen oder LEDs. Das Licht der Lichtquellen wird auf einer gemeinsamen optischen Achse in die Küvette eingekoppelt, d.h. das Licht jeder Lichtquelle durchstrahlt die Küvette auf einem im Wesentlichen gleichen Lichtweg und trifft dann auf den Detektor.

Die Lichtquellen sorgen bereits sendeseitig für eine Selektion. Besonders Laserlichtquellen haben eine sehr geringe Linienbreite, mit der Auflösungen in der Größenordnung von 10⁶ erreichbar sind. Herkömmlich wird ein derartiger Lichtsender mit einem unselektiven, breitbandigen Infrarotdetektor kombiniert. Umgekehrt wird herkömmlich bei einem hochselektiven NDIR-Detektor ein unspezifischer, breitbandiger Lichtsender genutzt.

Die Erfindung hat den Vorteil, dass sie nicht nur die sende- und empfangsseitige Selektivität kombiniert. Besonders mit Laserlichtquellen lassen sich wegen der geringen Linienbreite die Querempfindlichkeiten deutlich verringern, also die ungewollte Messung von Gaskomponenten mit Sendelicht, das eigentlich auf eine andere Gaskomponente abgestimmt ist. Darüber hinaus wird erfindungsgemäß die Messung mehrerer Gaskomponenten ermöglicht. Ein mechanisch bewegtes Filterrad ist dafür nicht erforderlich.

Besonders vorteilhaft ist es, wenn die Lichtquellen gleichzeitig aktivierbar sind. Eine sequentielle Messung der Gaskomponenten durch Multiplexing der Lichtquellen wäre zwar auch denkbar, aber durch simultane Einstrahlung der einzelnen Wellenlängen kann die gesamte Messzeit für jede Gaskomponente voll genutzt werden. So kommt der Fellgett-Vorteil zum Tragen, und es ergibt sich eine deutliche Verbesserung des Signal-Rausch-Verhältnisses. Die Gasanalysevorrichtung kann deshalb für empfindlichere Messungen in kleineren Messbereichen eingesetzt werden. Die Vorteile des NDIR-Verfahrens einer besonders hohen Selektivität und hohen Sensitivität bleiben erhalten.

Mindestens eine Lichtquelle ist vorzugsweise eine in ihrer Wellenlänge abstimmbare Laserlichtquelle. Dadurch kann die Anpassung an die Absorptionswellenlänge der zu messenden Gaskomponente sehr einfach erfolgen. Die Gasanalysevorrichtung ist dann auch nicht per Konstruktion auf bestimmte Gaskomponenten ausgerichtet, sondern an neue Anwendungen anpassbar.

Der Detektor ist vorzugsweise ein optoakustischer Detektor. Er weist also eine Kammer auf, die mit einem Gasgemisch entsprechend den zu untersuchenden Gaskomponenten aufweist. Ein optoakustischer Detektor hat eine herausragende Sensitivität und Selektivität insbesondere im Vergleich zu Alternativen wie Bandpassfiltern und erreicht Auflösungen in der Größenordnung von 8.000 bis 40.000. Mit einem optoakustischen Detektor lassen sich auf Grund Zweischichtprinzips auch noch restliche Querempfindlichkeiten unterhalb der Laserlinie unterdrücken.

Die Gasanalysevorrichtung weist vorzugsweise einen Frequenzgenerator auf, der mit den Lichtquellen verbunden ist, um deren Licht mit einer Frequenz zu modulieren. Vorsichtshalber sei angemerkt, dass diese Modulation eine Intensitätsmodulation ist, die nichts mit der eigentlichen Lichtwellenlänge zu tun hat. Die Modulation führt zu einer entsprechenden Anregung in dem Gasgemisch des optoakustischen Detektors, löst also dort den fotoakustischen Effekt selektiv für diejenige Gaskomponente aus, auf deren Absorptionswellenlänge die Lichtquelle abgestimmt ist.

Der Frequenzgenerator ist bevorzugt dafür ausgebildet, für jede Lichtquelle eine unterschiedliche Frequenz zu erzeugen. Dabei ist unerheblich, ob der Frequenzgenerator mehrkanalig ist oder mehrere Frequenzgeneratoren aufweist. Wenn jeder Lichtquelle eine eigene Modulationsfrequenz zugewiesen ist, werden die Signale der verschiedenen Gaskomponenten im Detektorsignal aufgrund dieser Modulationsfrequenz unterscheidbar und können simultan gemessen werden.

Die Gasanalysevorrichtung weist vorzugsweise einen Demodulator auf, um aus dem Detektorsignal durch phasensensitive Gleichrichtung mit der jeweiligen Frequenz ein Absorptionssignal der jeweiligen Gaskomponente zu erzeugen. Das ist also das Prinzip des Lock-In-Verstärkers. Die Demodulation schält aus dem Detektorsignal den jeweiligen Anteil heraus, der von den einzelnen Lichtquellen erzeugt ist, und trennt damit die einzelnen Messungen der Gaskomponenten. Dadurch können simultan Absorptionssignale für alle zu bestimmenden Gaskomponenten bei gleichzeitiger Beleuchtung mit allen Lichtquellen erzeugt werden. Der Demodulator kennt die Modulationsfrequenzen, ist vorzugsweise selbst an den Frequenzgenerator angeschlossen und nutzt dessen Signal zum Demodulieren.

Die Auswertungseinheit ist bevorzugt dafür ausgebildet, den Messwert für eine Gaskomponente um Einflüsse einer nicht auf die Gaskomponente abgestimmten Lichtquelle zu korrigieren. Für diese Korrektur wird die Querempfindlichkeit quantitativ festgestellt und korrigiert, d.h. welches Absorptionssignal bei Beleuchtung mit den jeweiligen nicht abgestimmten Lichtquellen entsteht. Die Korrekturvorschrift wird einmalig bestimmt und in allen Geräten abgelegt, kann aber auch individuell durch einen Kalibrierschritt gelernt werden.

Die Gasanalysevorrichtung weist bevorzugt eine Kalibriereinheit auf, mittels derer mindestens eine gasgefüllte Kalibrierküvette oder ein anderes Kalibriernormal in dem Lichtweg zwischen Lichtsender und Detektor angeordnet werden kann. Diese Anordnung erfolgt beispielsweise durch einen Motor, der die Küvette ein- und ausschwenkt. Durch die Kalibrierung können Driften wie eine Degradation des Lichtsenders, Verunreinigung der Küvette und sonstigen Elemente im Lichtweg aufgefangen werden, die von dem konkreten Messgas und damit dem eigentlichen Messeffekt unabhängig sind.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die einzige Figur der Zeichnung zeigt in:

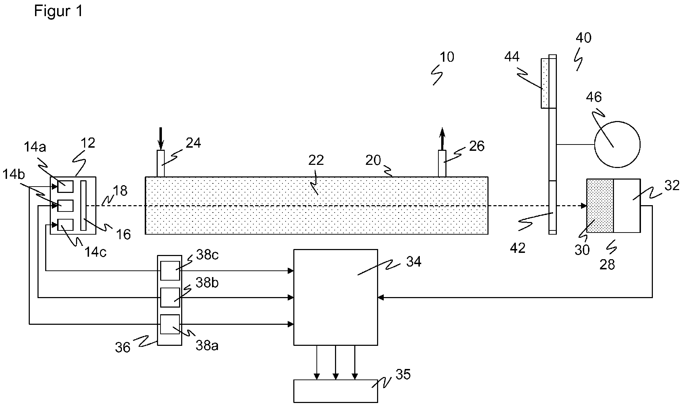

Fig. 1 eine Blockdarstellung eines erfindungsgemäßen NDIR-Spektrometers.

Figur 1 zeigt schematisch einen beispielhaften Aufbau eines erfindungsgemäßen NDIR-Spektrometers 10. Ein Lichtsender 12 enthält drei Lichtquellen 14a-c, wobei die Anzahl der Lichtquellen 14a-c mit der Anzahl zu erfassender Gaskomponenten übereinstimmt und nur zwei Lichtquellen oder zusätzliche Lichtquellen ebenso denkbar sind. Jede Lichtquelle 14a-c erzeugt jeweils schmalbandiges Sendelicht in einem Wellenlängenbereich entsprechend der Absorptionswellenlänge einer zu erfassenden Gaskomponente, beispielsweise die Lichtquelle 14a für CO, die Lichtquelle 14b für NO und die Lichtquelle 14c für SO₂. Besonders geeignet sind wegen ihrer geringen Linienbreite Laserlichtquellen, insbesondere Laserdioden, die wiederum als abstimmbare Laser (TDL, Tunable Laser Diode) ausgebildet sein können, um die Anpassung an eine Gaskomponente vorzunehmen.

Das Sendelicht der Lichtquellen 14a-c wird mit Hilfe eines optischen Elements 16 auf eine gemeinsame optische Achse 18 gekoppelt. Dabei kommt es nicht auf exakte Übereinstimmung an, beispielsweise ist ein gewisser Parallelversatz unproblematisch und das optische Element 16 deshalb in anderen Ausführungsformen verzichtbar. Ebenso irrelevant ist ein Versatz der Lichtquellen 14a-c längs der optischen Achse. Nicht dargestellt ist eine denkbare Kollimationsoptik zur Formung eines Lichtstrahls, die auch in die Lichtquellen 14a-c integriert sein kann.

Hierbei besteht die Gasfüllung des Detektors aus einem Gemisch mehrerer Gaskomponenten. Der Detektor ist somit überall dort sensitiv, wo die verschiedenen Gaskomponenten absorbieren

Auf der optischen Achse 18 des Lichtsenders 12 ist eine Messküvette 20 angeordnet, die somit von dem Sendelicht durchstrahlt wird. Die Messküvette 20 ist mit dem Messgas 22 gefüllt, wobei Messgas 22 auch dynamisch durch einen Einlass 24 und einen Auslass 26 ausgetauscht werden kann oder die Messküvette 20 dynamisch durchströmt.

In Transmissionrichtung auf der optischen Achse 18 hinter der Messküvette 20 befindet sich ein Detektor 28, der ein Wellenlängenfilter 30 und ein Detektorelement 32 aufweist. Der Detektor 28 ist vorzugsweise ein optoakustischer Detektor, bei dem eine Kammer, die mit einer Mischung der zu erfassenden Gaskomponenten gefüllt ist, als Wellenlängenfilter 30 fungiert und das Detektorelement 32 beispielsweise ein Piezodetektor ist. Alternativ ist auch ein optisches Filter mit einem IR-Lichtempfänger denkbar.

Ein Demodulator 34 ist einerseits mit dem Detektorelement 32 und andererseits mit einem Frequenzgenerator 36 verbunden, der mehrere Frequenzkanäle 38a-c aufweist. Der Demodulator 34 ist in der Lage, eine phasensensitive Gleichrichtung eines Detektorsignals des Detektorelements 32 mit einer jeweiligen von dem Frequenzgenerator 36 gelieferten Trägerfrequenz vorzunehmen, was dem Prinzip des Lock-In-Verstärkers entspricht. Die von dem Demodulator 34 ausgegebenen Signale können in einer internen oder externen Auswertungseinheit 35 weiterverarbeitet werden.

Der Frequenzgenerator 36 ist außerdem mit dem Lichtsender 12 verbunden, um mit jeweils einem Frequenzkanal 38a-c jeweils das Sendelicht einer Lichtquelle 14a-c in seiner Amplitude mit einer unterschiedlichen Frequenz zu modulieren.

Eine Kalibriereinheit 40 ist in der Lage, wahlweise ein transparentes Fenster 42 oder eine Kalibrierküvette 44 mit einem Kalibriergas in die optische Achse 18 einzuschwenken. Dazu ist ein Motor 46 vorgesehen. Diese Konstruktion ist nur ein Beispiel, und andere Bewegungen der Kalibrierküvette 44 oder eine wahlweise Modifikation des Lichtwegs durch die Kalibrierküvette 44 oder nicht sind denkbar.

Im Betrieb wird nun für eine Gasanalyse ein Messgas 22 in die Küvette 20 eingefüllt oder ein Gasstrom durch die Küvette 20 geleitet. Die Lichtquellen 14a-c senden jeweils mit einer eigenen Frequenz der Frequenzkanäle 38a-c moduliertes Sendelicht längs der optischen Achse 18 durch das Messgas 22 in der Messküvette. In der Messküvette 20 absorbieren die Gaskomponenten des Messgases 22 entsprechend ihrer Konzentration einen Teil des jeweils auf die Absorptionswellenlängen abgestimmten Sendelichts.

Das übrige Licht fällt auf den Wellenlängenfilter 30, insbesondere auf eine Kammer mit einem Gasgemisch aus den zu erfassenden Gaskomponenten. Je nachdem, wieviel Sendelicht das Messgas 22 in einem jeweiligen Wellenlängenbereich der Lichtquellen 14a-c absorbiert hat, erfolgt eine schwächere oder stärkere Anregung des Gasgemischs mit den aufmodulierten Frequenzen. Das Detektorelement 32 wird entsprechend dem fotooptischen Effekt in eine entsprechende Schwingung versetzt und erzeugt ein Detektorsignal, das eine Überlagerung der aufmodulierten Frequenzen bei Amplituden entsprechend der Absorption ist.

Der Demodulator 34 führt nun in dem Detektorsignal phasensensitive Gleichrichtungen mit den Frequenzen der Frequdes Frequenzgenerators 36 durch. Dabei entstehen komponentenspezifische Absorptionssignale, die dann als Messergebnis ausgegeben beziehungsweise weiterverarbeitet werden.

Durch das Messverfahren, das sowohl sende- wie empfangsseitig äußerst selektiv auf die Absorptionswellenlängen angepasst ist, gibt es nur wenig Querempfindlichkeiten, also Einflüsse der jeweils anderen Lichtquellen 14a-c auf das Absorptionssignal. Es ist außerdem denkbar, solche Querempfindlichkeiten vorab messtechnisch zu ermitteln und dann im Betrieb durch Querverrechnung vom jeweiligen Absorptionssignal oder dem daraus ermittelten Messwert abzuziehen. Bei einer solchen Vorabmessung wird beispielsweise nacheinander jeweils ein Lichtsender 14a-c deaktiviert und das dabei erfasste Absorptionssignal ermittelt. Im Idealfall ohne Querempfindlichkeit sollte hier gar kein Signal entstehen, und somit kann auf diese Weise die in der Kompensation zu bestimmende Abweichung ermittelt werden.

In der Gasanalysevorrichtung 10 kann es weiterhin Driften geben, die ein Nachkalibrieren erfordern. Dabei handelt es sich beispielsweise um Temperatureffekte oder um Alterungseffekte der Lichtquellen 14a-c oder des Detektorelements 32, um Verschmutzungen der optischen Durchtrittsflächen insbesondere an der Messküvette 20 oder um eine Änderung der Gaskonzentration oder Gaszusammensetzung in der Kammer des Detektors 28. Mit Hilfe der Kalibriereinheit 40 kann zum Nachkalibrieren eine Kalibrierküvette 40 in die optische Achse 18 eingeschwenkt werden. Während des Nachkalibrierens kann es sinnvoll sein, die Messküvette 20 zu leeren. Die Kalibrierküvette 40 enthält vorzugsweise selektiv ein reines Gas einer der zu erfassenden Gaskomponenten. Es ist denkbar, für jede Gaskomponente eine eigene Kalibrierküvette 40 vorzuhalten. Alternativ kann aus Driften bei einer Gaskomponente auf Driften bei anderen Gaskomponenten geschlossen werden.

## Patentansprüche

1. Gasanalysevorrichtung (10) nach dem Prinzip der nichtdispersiven Infrafrotspektroskopie (NDIR) zur Erfassung von Gaskomponenten in einem Messgas (22), wobei die Gasanalysevorrichtung (10) einen Lichtsender (12), eine Küvette (20) zur Aufnahme des Messgases (22), einen im Wellenlängenbereich der Absorption der zu erfassenden Gaskomponenten selektiv sensitiven Detektor (28) und eine Auswertungseinheit (36, 35) für ein Detektorsignal des Detektors (28) aufweist, und wobei Lichtsender (12), Küvette (20) und Detektor (28) derart angeordnet sind, dass Licht des Lichtsenders (12) nach Transmission der Küvette (20) auf den Detektor (32) fällt,
**dadurch gekennzeichnet,**
**dass** der Lichtsender (12) mehrere Lichtquellen (14a-c), insbesondere Laserlichtquellen, unterschiedlicher Wellenlängen aufweist, deren Licht auf einer gemeinsamen optischen Achse (18) in die Küvette (20) einkoppelbar ist.

2. Gasanalysevorrichtung (10) nach Anspruch 1,
wobei die Lichtquellen (14a-c) gleichzeitig aktivierbar sind.

3. Gasanalysevorrichtung (10 nach Anspruch 1 oder 2,
wobei mindestens eine Lichtquelle (14a-c) eine in ihrer Wellenlänge abstimmbare Laserlichtquelle ist.

4. Gasanalysevorrichtung (10) nach einem der vorhergehenden Ansprüche,
wobei der Detektor (28) ein optoakustischer Detektor ist.

5. Gasanalysevorrichtung (10) nach einem der vorhergehenden Ansprüche, die einen Frequenzgenerator (36) aufweist, der mit den Lichtquellen (14a-c) verbunden ist, um deren Licht mit einer Frequenz zu modulieren.

6. Gasanalysevorrichtung (10) nach Anspruch 5,
wobei der Frequenzgenerator (36, 38a-c) dafür ausgebildet ist, für jede Lichtquelle (14a-c) eine unterschiedliche Frequenz zu erzeugen.

7. Gasanalysevorrichtung (10) nach Anspruch 5 oder 6,
die einen Demodulator (34) aufweist, um aus dem Detektorsignal durch phasensensitive Gleichrichtung mit der jeweiligen Frequenz ein Absorptionssignal der jeweiligen Gaskomponente zu erzeugen.

8. Gasanalysevorrichtung (10) nach einem der vorhergehenden Ansprüche,
wobei die Auswertungseinheit (35) dafür ausgebildet ist, den Messwert für eine Gaskomponente um Einflüsse einer nicht auf die Gaskomponente abgestimmten Lichtquelle (14a-c) zu korrigieren.

9. Gasanalysevorrichtung (10) nach einem der vorhergehenden Ansprüche,
die eine Kalibriereinheit (40) aufweist, mittels derer mindestens eine gasgefüllte Kalibrierküvette (44) oder ein anderes Kalibriernormal in dem Lichtweg (189 zwischen Lichtsender (12) und Detektor (28) angeordnet werden kann.

10. Verfahren zur Gasanalyse nach dem Prinzip der nichtdispersiven Infrafrotspektroskopie (NDIR) zur Erfassung von Gaskomponenten in einem Messgas (22), wobei Licht durch eine Küvette (20) mit dem Messgas (22) auf einen Detektor (28) gestrahlt wird, der im Wellenlängenbereich der Absorption der zu erfassenden Gaskomponenten selektiv sensitiv ist, und das Detektorsignal ausgewertet wird,
**dadurch gekennzeichnet,**
**dass** Licht aus mehreren Lichtquellen (14a-c), insbesondere Laserlichtquellen, unterschiedlicher Wellenlängen auf einer gemeinsamen optischen Achse durch die Küvette (20) gestrahlt wird.

11. Verfahren nach Anspruch 10,
wobei die Lichtquellen (14a-c) gleichzeitig aktiv sind.

12. Verfahren nach Anspruch 10 oder 11,
wobei die Lichtquellen (14a-c) in ihrer Wellenlänge auf die Absorptionswellenlängen der zu erfassenden Gaskomponenten abgestimmt sind.

13. Verfahren nach einem der Ansprüche 10 bis 12,
wobei der Detektor (28) das Detektionssignal optoakustisch erzeugt.

14. Verfahren nach einem der Ansprüche 10 bis 13,
wobei die Lichtquellen (14a-c) mit unterschiedlichen Frequenzen (38a-c) moduliert werden.

15. Verfahren nach Anspruch 14,
wobei aus dem Detektorsignal Absorptionssignale der jeweiligen Gaskomponenten durch phasensensitive Gleichrichtung mit der jeweiligen Frequenz der Lichtquellen erzeugt werden.
